# EUROPEAN PATENT SPECIFICATION

(11) **EP 3 824 662 B1**
(45) Date of publication and mention of the grant of the patent: **06.08.2025**
(21) Application number: 19877346.7
(22) Date of filing: 17.10.2019
(51) Int. Cl.: H04W 12/106, H04W 24/10, H04W 12/10, H04W 80/02, H04L 9/40, H04W 76/15

(54) **CELL-GROUP INDICATION FROM PDCP UPON INTEGRITY-VERIFICATION FAILURE**
ZELLGRUPPENANZEIGE AUS PDCP WÄHREND EINES INTEGRITÄTSVERIFIZIERUNGSFEHLERS
INDICATION DE GROUPE DE CELLULES PROVENANT DE PDCP LORS D'UN ÉCHEC DE VÉRIFICATION D'INTÉGRITÉ

(30) Priority: 24.10.2018 US 201862749718 P
(43) Date of publication of application: 26.05.2021
(73) Proprietor: Nokia Technologies Oy, 02610 Espoo (FI)
(72) Inventor: KOSKINEN, Henri, 02600 Espoo (FI)
(74) Representative: Script Intellectual Property LLP
(86) International application number: PCT/FI2019/050741
(87) International publication number: WO 2020/084191

(56) References cited:
- EP-A1- 3 606 274
- WO-A1-2010/121408
- WO-A1-2018/171546
- WO-A1-2018/229657
- INTERDIGITAL INC: "Discussion on Handling Split SRB during SCG Failure", vol. RAN WG2, no. Sanya, China; 20180416 - 20180420, 5 April 2018 (2018-04-05), XP051415170, Retrieved from the Internet <URL:http://www.3gpp.org/ftp/tsg%5Fran/WG2%5FRL2/TSGR2%5F101bis/Docs/> [retrieved on 20180405]
- RAPPORTEUR (ERICSSON): "Minor corrections ASN.1 review 1", vol. RAN WG2, no. Vancouver, Canada; 20180122 - 20180126, 27 January 2018 (2018-01-27), XP051387003, Retrieved from the Internet <URL:http://www.3gpp.org/ftp/tsg%5Fran/WG2%5FRL2/TSGR2%5FAHs/2018%5F01%5FNR/Docs/> [retrieved on 20180127]
- VIVO: "Behavior on DRB IP check failure", vol. RAN WG2, no. Athens, Greece; 20180226 - 20180302, 15 February 2018 (2018-02-15), XP051399825, Retrieved from the Internet <URL:http://www.3gpp.org/ftp/tsg%5Fran/WG2%5FRL2/TSGR2%5F101/Docs/> [retrieved on 20180215]
- ZTE CORPORATION: "DRB integrity check failure handling", 3GPP TSG-RAN WG2 MEETING #101, ATHENS, GREECE , R2-1803967, vol. RAN WG2, 26 February 2018 (2018-02-26), XP051401004
- VIVO: "Behavior on DRB IP check failure", 3GPP TSG-RAN WG2 #101, ATHENS, GREECE , R2-1802077, vol. RAN WG2, 26 February 2018 (2018-02-26), XP051399825
- HUAWEI ET AL.: "User plane integrity protection check failure handling in SCG for NR-NR DC", 3GPP TSG-RAN WG2 MEETING#103BIS, R2-1814691, vol. RAN WG2, 8 October 2018 (2018-10-08), Chengdu, China, XP051524082

## Description

### TECHNICAL FIELD:

The teachings in accordance with the exemplary embodiments of this invention relate generally to improving integrity check operations and, more specifically, relate to improving integrity check operations for new radio (NR) applications.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- DRB: data radio bearer
- EN-DC: EUTRA-NR dual connectivity
- eNodeB: base station
- EPC: evolved packet core
- EUTRA: evolved universal terrestrial radio access
- MCG: master cell group
- MgNB: master node B
- MN: master node
- MR-DC: multi-RAT dual connectivity
- NE-DC: NR-E-UTRA Dual Connectivity
- NG-eNB: next generation eNodeB
- NG-RAN: next generation RAN
- NGEN-DC: NG-RAN EN-DC
- NR: NR Radio Access
- NR-E-UTRA: NR evolved universal terrestrial radio access
- NSA: non-standalone
- PDCP: packet data convergence protocol
- PDU: protocol data unit
- RAN: radio access network
- RAT: radio access technology
- RN: relay node
- RRC: radio resource control
- SCG: secondary cell group
- SDAP: service data adaptation protocol
- SgNB: secondary node B
- SRB: signaling radio bearer
- SLRB: sidelink radio bearer
- SN: secondary node
- UE: user equipment
- XnAP: Xn Application Protocol

The 5G new radio system is an evolution of the 4G mobile communication systems. Accordingly, a security architecture for 5G is designed to integrate 4G equivalent security. In addition, for 5G new radio there has been reassessment of security threats and packet data unit integrity protection.

In accordance with present standards a Packet Data Convergence Protocol (PDCP) provides its services including integrity protection and verification operations to upper layers such as the RRC and user plane upper layers.

Example embodiments of the invention work to address issues and improve such integrity protection and verification operations.
INTERDIGITAL INC: "Discussions on Handling Split SRB during SCG Failure", 3GPP DRAFT, R2-1801220, 5 April 2018, discusses handling split signalling radio bearer (SRB) during secondary cell group (SCG) failure. It discloses that the UE changes the configured uplink (UL) path of the split SRB to master cell group (MCG) when secondary cell group (SCG) failure occurs. This enables the transmission of the *SCGFailureInformation* message as well as subsequent RRC messages directly to the master node (MN). A UE initiates the procedure to report SCG failures when SCG transmission is not suspended and when there is an integrity check failure indication from SCG lower layers.
VIVO: "Behavior on DRB IP check failure", 3GPP DRAFT, R2-1802077, 15 February 2018, discusses behaviour for data radio bearer (DRB) IP check failures. It discloses that, after IP check failure is detected on split DRB, UE is to discard the packets failing IP check. If the attack persist, UE is to report the IP check failure to MN/SN. If the split DRB IP check failure is reported to SN, SN should send a DRB IP check failure indication to MN. The split DRB IP check failure may also be reported to MN. As MCG and SCG part of the DRB have common PDCP configure form MN. Security issue on MCG part of the DRB may also be a security issue on SCG part of the DRB. So it may not be secure to send data over one part the split DRB while the other experience persistent IP check failure. Therefore, after indication of split DRB IP check failure, either from UE or SN, MN suspends both MCG and SCG parts of the split DRB. Then MN may reconfigure the split DRB.

### SUMMARY:

The invention is defined by the independent claims. Particular embodiments are set out in the dependent claims.

### BRIEF DESCRIPTION OF THE DRAWINGS:

The foregoing and other aspects of embodiments of this invention are made more evident in the following Detailed Description, when read in conjunction with the attached Drawing Figures, wherein:

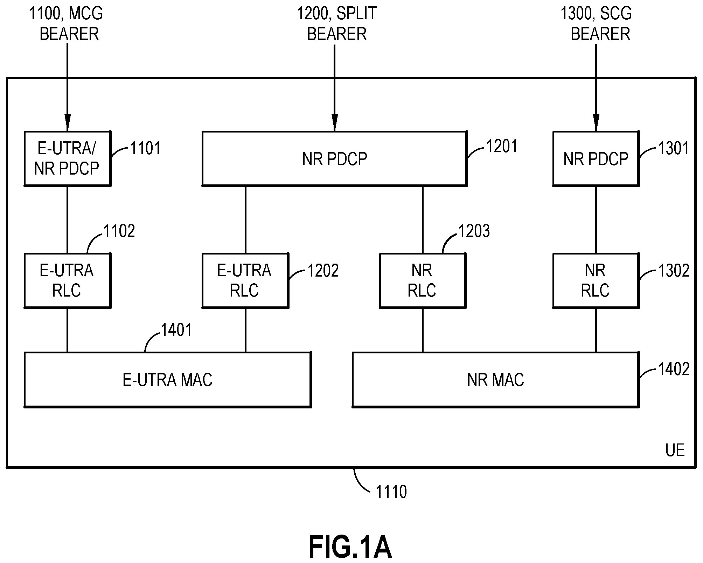

FIG. 1A shows Figure 4.2.2-1 of 3GPP TS 37.340 V15.3.0 (2018-09): Radio Protocol Architecture for MCG, SCG and split bearers from a UE perspective in MR-DC with EPC.

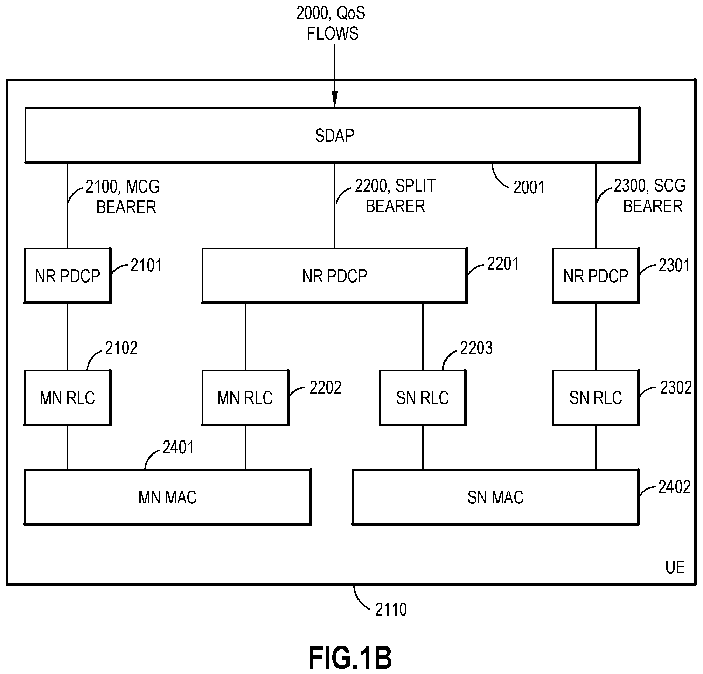

FIG. 1B shows Figure 4.2.2-2 of 3GPP TS 37.340 V15.3.0 (2018-09): Radio Protocol Architecture for MCG, SCG and split bearers from a UE perspective in device; wherein the indication is sent to the another network device over an Xn application protocol; wherein the control protocol entity is associated with a central unit of the network device, and wherein the central unit is subdivided into a control-plane side and a user-plane side, and wherein the information comprising the indication of the integrity verification failure and the indication of the cell group is sent from the user-plane side to the control-plane side using an E1AP protocol; wherein based on the identifying the information comprising the indication of the integrity verification failure and the indication of the cell group is sent from a packet data convergence protocol entity to a radio resource control layer at the network device; wherein the radio resource control layer is determining whether the at least one protocol data unit was received over a master cell group or a secondary cell group, and based on the determining, initiating at least one procedure; wherein the at least one bearer comprises a split bearer; and/or wherein the network device is embodied in one of the user equipment and a base station of the communication network.

A non-transitory computer-readable medium storing program code, the program code executed by at least one processor to perform at least the method as described in the paragraphs above.

In another example aspect of the invention, there is an apparatus comprising: means for identifying, by a network device of a communication network, an integrity verification failure of at least one protocol data unit received by the network device over a cell group configured to a user equipment; and means, based on identifying the integrity verification failure, for sending to a control protocol entity associated with the network device information comprising an indication of the integrity verification failure and an indication of the cell group.

A further example embodiment is an apparatus comprising the apparatus of the previous paragraph, wherein the at least one protocol data unit comprises at least one packet data convergence protocol data unit, and wherein the at least one packet data convergence protocol data unit is received over the cell group using at least one bearer, and there is means for determining by the network device at least one condition is associated with the at least one bearer; wherein the sending the information comprising the indication of the integrity verification failure and the indication of the cell group is based on the determined at least one condition; wherein the at least one condition comprises at least one of: a condition that the network device is configured by a radio resource control layer to perform the at least one operation based on the integrity verification failure, a condition that the at least one packet data convergence protocol data unit was received over a split bearer, and a condition that the at least one packet data convergence protocol data unit was received over the at least one bearer with data duplication configured; wherein there is means for determining whether the at least one protocol data unit was received over a master cell group or a secondary cell group, and based on the determining, initiating at least one procedure; wherein for a case it is determined that the at least one protocol data unit was received over a master cell group, the at least one procedure comprises: initiating a radio resource control connection re-establishment procedure; wherein for a case it is determined that the at least one protocol data unit was received over a secondary cell group, the at least one procedure comprises initiating a secondary cell group failure information procedure; wherein there is means for determining by the control protocol entity associated with the network device that the cell group is controlled by another network device; and based on the determining, causing communicating of the indication of the integrity verification failure and the cell group to the another network device; wherein the indication is sent to the another network device over an Xn application protocol; wherein the control protocol entity is associated with a central unit of the network device, and wherein the central unit is subdivided into a control-plane side and a user-plane side, and wherein the information comprising the indication of the integrity verification failure and the indication of the cell group is sent from the user-plane side to the control-plane side using an E1AP protocol; wherein based on the identifying the information comprising the indication of the integrity verification failure and the indication of the cell group is sent from a packet data convergence protocol entity to a radio resource control layer at the network device; wherein the radio resource control layer is determining whether the at least one protocol data unit was received over a master cell group or a secondary cell group, and based on the determining, initiating at least one procedure; wherein the at least one bearer comprises a split bearer; and/or wherein the network device is embodied in one of the user equipment and a base station of the communication network.

In accordance with the example embodiments as described in the paragraph above, at least the means for identifying, sending, and determining comprises a network interface, and computer program code stored on a computer-readable medium and executed by at least one processor.

In another example aspect of the invention, there is an apparatus, comprising: at least one processor; and at least one memory including computer program code, where the at least one memory and the computer program code are configured, with the at least one processor, to cause the apparatus to at least: identify, by a network device of a communication network, an integrity verification failure of at least one protocol data unit received by the network device over a cell group configured to a user equipment; and based on identifying the integrity verification failure, send to a control protocol entity associated with the network device information comprising an indication of the integrity verification failure and an indication of the cell group.

A further example embodiment is an apparatus comprising the apparatus of the previous paragraph, wherein the at least one protocol data unit comprises at least one packet data convergence protocol data unit, and wherein the at least one packet data convergence protocol data unit is received over the cell group using at least one bearer; and the at least one memory including the computer program code is configured with the at least one processor to cause the apparatus to: determine by the network device at least one condition is associated with the at least one bearer, wherein the sending the information comprising the indication of the integrity verification failure and the indication of the cell group is based on the determined at least one condition; wherein the at least one condition comprises at least one of: a condition that the network device is configured by a radio resource control layer to perform the at least one operation based on the integrity verification failure, a condition that the at least one packet data convergence protocol data unit was received over a split bearer, and a condition that the at least one packet data convergence protocol data unit was received over the at least one bearer with data duplication configured; wherein the at least one memory including the computer program code is configured with the at least one processor to cause the apparatus to: determine whether the at least one protocol data unit was received over a master cell group or a secondary cell group, and based on the determining, initiating at least one procedure; wherein for a case it is determined that the at least one protocol data unit was received over a master cell group, the at least one procedure comprises: initiating a radio resource control connection re-establishment procedure, and wherein for a case it is determined that the at least one protocol data unit was received over a secondary cell group, the at least one procedure comprises initiating a secondary cell group failure information procedure; wherein the at least one memory including the computer program code is configured with the at least one processor to cause the apparatus to: determine by the control protocol entity associated with the network device that the cell group is controlled by another network device; and based on the determining, cause communicating of the indication of the integrity verification failure and the cell group to the another network device; wherein based on the identifying the information comprising the indication of the integrity verification failure and the indication of the cell group is sent from a packet data convergence protocol entity to a radio resource control layer at the network device; and/or wherein the radio resource control layer is determining whether the at least one protocol data unit was received over a master cell group or a secondary cell group, and based on the determining, initiating at least one procedure.

A communication system comprising the apparatus performing operations as described above.

### BRIEF DESCRIPTION OF THE DRAWINGS:

The foregoing and other aspects of embodiments of this invention are made more evident in the following Detailed Description, when read in conjunction with the attached Drawing Figures, wherein:
FIG. 1A shows Figure 4.2.2-1 of 3GPP TS 37.340 V15.3.0 (2018-09): Radio Protocol Architecture for MCG, SCG and split bearers from a UE perspective in MR-DC with EPC.
FIG. 1B shows Figure 4.2.2-2 of 3GPP TS 37.340 V15.3.0 (2018-09): Radio Protocol Architecture for MCG, SCG and split bearers from a UE perspective in MR-DC with 5GC (NGEN-DC, NE-DC);
FIG. 2 shows a high level block diagram of various devices used in carrying out various aspects of the invention; and
FIG. 3 shows a method in accordance with example embodiments of the invention which may be performed by an apparatus.

### DETAILED DESCRIPTION:

In this invention, improvements to integrity check failure operations are proposed.

In accordance with standards at the time of this application, data unit integrity protection functions can include both integrity protection and integrity verification and can be performed in PDCP, if configured. A data unit that is integrity protected is the PDU header and the data part of the PDU before ciphering. The integrity protection is applied to PDCP Data PDUs of SRBs. The integrity protection is applied to PDCP Data PDUs of DRBs for which integrity protection is configured.

According to 3GPP standards there are integrity protection functions which can include both integrity protection and integrity verification. These functions are performed in PDCP for PDCP entities associated with SRBs and/or an SLRB that needs integrity protection.

The Packet Data Convergence Protocol supports the following functions:
- transfer of data (user plane or control plane);
- maintenance of PDCP SNs;
- header compression and decompression using the ROHC protocol;
- ciphering and deciphering;
- integrity protection and integrity verification;
- timer based SDU discard;
- for split bearers, routing;
- duplication;
- reordering and in-order delivery;
- out-of-order delivery; and
- duplicate discarding.

As noted above, Packet Data Convergence Protocol includes integrity protection and integrity verification functions. In these integrity protection functions operations a data unit that is integrity protected includes a PDU header and a data part of the PDU before a ciphering. In accordance with standards an integrity protection function can be performed for PDCP entities associated with DRBs if integrity protection is configured.

Example embodiments of the invention work to address issues and improve such integrity verification operations.

It is noted that according to specification 3GPP TS 38.323 V15.3.0 (2018-09):
NR PDCP currently specifies:

### 5.2.2 Receive operation

### 5.2.2.1 Actions when a PDCP Data PDU is received from lower layers

... *After determining the COUNT value of the received PDCP Data PD U* = *RCVD_COUNT, the receiving PDCP entity shall: - perform deciphering and integrity verification of the PDCP Data PDU using COUNT = RCVD_COUNT;*
- *if integrity verification fails:*
   - *indicate the integrity verification failure to upper layer;*
   - *discard the PDCP Data PDU;*

Further, according to specification 3GPP TS 36.331 V15.3.0 (2018-09):

### 5.3.7 RRC connection re-establishment

### 5.3.7.2 Initiation

*The UE shall only initiate the procedure either when AS security has been activated or for a NB-IoT UE supporting RRC connection re-establishment for the Control Plane CIoT EPS optimisation. The UE initiates the procedure when one of the following conditions is met:*
...
*1> upon integrity check failure indication from lower layers concerning SRB1 or SRB2; or*

Also 3GPP TS 38.331 V15.3.0 (2018-09) for NR RRC specifies:

### 5.3.7 RRC connection re-establishment

### 5.3.7.2 Initiation

*The UE initiates the procedure when one of the following conditions is met:*
...
*1> upon integrity check failure indication from lower layers concerning SRB1 or SRB2; or*

### 5.7.3 SCG failure information

### 5.7.3.2 Initiation

*A UE initiates the procedure to report SCG failures when SCG transmission is not suspended and when one of the following conditions is met:*
...
*1> upon integrity check failure indication from SCG lower layers, in accordance with subclause 5.3.5.8.1.*

Further, 3GPP TS 37.340 V15.3.0 (2018-09) specifies the different bearer types that can be configured to a UE configured in Multi-RAT Dual Connectivity (MR-DC), where SRB1 and SRB2 can also be configured as split bearers:
*In MR-DC, from a UE perspective, three bearer types exist: MCG bearer, SCG bearer and split bearer. These three bearer types are depicted in Figure 4.2.2-1 for MR-DC with EPC (EN-DC) and in Figure 4.2.2-2 of* 3GPP TS 37.340 V15.3.0 (2018-09*)for MR-DC with 5GC (NGEN-DC, NE-DC).*

In accordance with standards there is non-split bearers and split bearers. A non-split bearer may be a bearer whose radio resources are provided by an MN or SN base station. Whereas a split bearer in dual connectivity includes a bearer whose radio protocols are located in both MN and a SN devices and use both MgNB and SgNB resources.

In the Multi-RAT Dual Connectivity (MR-DC) standards at the time of this application, from a UE perspective, three bearer types exist: MCG bearer, SCG bearer and split bearer. These three bearer types are depicted in FIG. 1A for MR-DC with EPC (EN-DC) and in FIG. 1B for MR-DC with 5GC (NGEN-DC, NE-DC). MR-DC is a generalization of the Intra-E-UTRA Dual Connectivity (DC), where a multiple Rx/Tx UE may be configured to utilize resources provided by two different nodes connected via non-ideal backhaul. One node acts as the MN and the other as the SN. The MN and SN are connected via a network interface and at least the MN is connected to the core network.

FIG. 1A shows a radio protocol architecture for MR-DC bearers MCG, SCG and split bearers from a UE perspective in MR-DC with EPC (EN-DC) at a network device.

As shown in FIG. 1A there are three bearers depicted for MR-DC and EPC (EN-DC). As shown in FIG. 1A there is an MCG Bearer 1100, a Split Bearer 1200, and a SCG Bearer 1300. In FIG. 1A for EN-DC, the network can configure either an E-UTRA PDCP or NR PDCP 1101 for MN terminated MCG bearer 1100 while NR PDCP is always used for all other bearers. Further, NR PDCP 1201 can show a split bearer, where the "/" between E-UTRA PDCP and NR PDCP of box 1101 of FIG. 1A can show that an MCG bearer can be configured with either LTE PDCP aka E-UTRA PDCP (e.g., 3GPP 36.323) or NR PDCP (e.g., 3GPP 38.323). Then data outgoing from the device (e.g., gNB, eNB, or UE) first go through this PDCP layer and then gets into an RLC layer. FIG. 1A shows in an RLC layer there can be an E-UTRA RLC 1102, E-UTRA RLC 1202, NR RLC 1203, and NR RLC 1302. Then for integrity related operations in EN-DC, NR RLC 1203 or NR RLC 1302 and NR MAC 1402 is used in the MN or UE while E-UTRA RLC 1102 or E-UTRA RLC 1202 and E-UTRA MAC 1401 is used in the SN.

Further, in accordance with standards NG-RAN supports NG-RAN E-UTRA-NR Dual Connectivity (NGEN-DC), in which a UE is connected to one NG-eNB that acts as a MN and one gNB that acts as a SN. The NG-eNB is connected to the 5GC and the gNB is connected to the NG-eNB via the Xn interface. Further, NG-RAN supports NR-E-UTRA Dual Connectivity (NE-DC), in which a UE is connected to one gNB that acts as a MN and one NG-eNB that acts as a SN. The gNB is connected to 5GC and the NG-eNB is connected to the gNB via the Xn interface. Further, NG-RAN may support NR-NR Dual Connectivity, in which a UE is connected to one gNB that acts as a MN and one gNB that acts as a SN. The MN is connected to 5GC and the SN is connected to the MN via the Xn interface. In NGEN-DC, E-UTRA RLC/MAC is used in the MN while NR RLC/MAC is used in the SN. In NE-DC, NR RLC/MAC is used in the MN. In NR-NR dual connectivity, NR radio protocols are used.

FIG. 1B shows Figure 4.2.2-2 of 3GPP TS 37.340 V15.3.0 (2018-09): Radio Protocol Architecture for MCG, SCG and split bearers from a UE perspective in MR-DC with 5GC (NGEN-DC, NE-DC, NR-NR DC). As shown in FIG. 1B there are three bearer types for MR-DC with 5GC (NGEN-DC, NE-DC, NR-NR DC).

As shown in FIG. 1B there are QoS flows 2000 of packet data units to SDAP 2001. Then the flow is mapped to one of three bearer types depicted for MR-DC and 5GC (NGEN-DC, NE-DC, NR-NR DC). As shown in FIG. 1B there is an MCG Bearer 2100, a Split Bearer 2200, and a SCG Bearer 2300. For NGEN-DC and NE-DC and NR-NR DC NR PDCP is used for all bearer types. Then data outgoing from the device (e.g., gNB, eNB, or UE) gets into an RLC layer. FIG. 1B shows in an RLC layer there can be an MN RLC 2102, MN RLC 2202, SN RLC 2203, and SN RLC 2302. Then the bearers are mapped to MN MAC 2401 and/or SN MAC 2402 as in FIG. 1B.

From a network perspective each bearer as in FIG. 1B (MCG Bearer 2100, SCG Bearer 2300, and Split Bearer 2200) can be terminated either in MN or in SN. There can be network side protocol termination.

However, it is noted that based on operations in the present specifications as similarly stated above at least the following problems can occur:
**Sub-problem 1.** Signalling radio bearers (SRB) SRB1, SRB2 can be split bearers. If integrity-verification failure occurs on SRB1 or SRB2, the UE initiates RRC connection re-establishment, regardless of whether the RRC PDU was received over MCG or SCG. In the case of SCG one might claim that RRC connection re-establishment is unnecessary, and initiating SCG failure information procedure would be sufficient; and
**Sub-problem 2.** NR RRC currently relies on integrity check failure indication from SCG lower layers. However, on split bearers, PDCP - the protocol layer in charge of integrity check failure indication to RRC - is not associated with SCG any more than with MCG: PDCP only indicates to RRC whenever integrity check failure occurs. And because it is a split bearer, RRC has no way of associating this failure to MCG or SCG; and/or
**Sub-problem 3.** Within the radio access network, different network nodes do not seem to have means to inform each other about integrity-verification failures.

Further, it is noted that these operations in the present standards can occur when split bearers are enabled, such as from a UE perspective.

Example embodiment of the invention works to at least address these issues and improve operations of these integrity protection and verification operations.

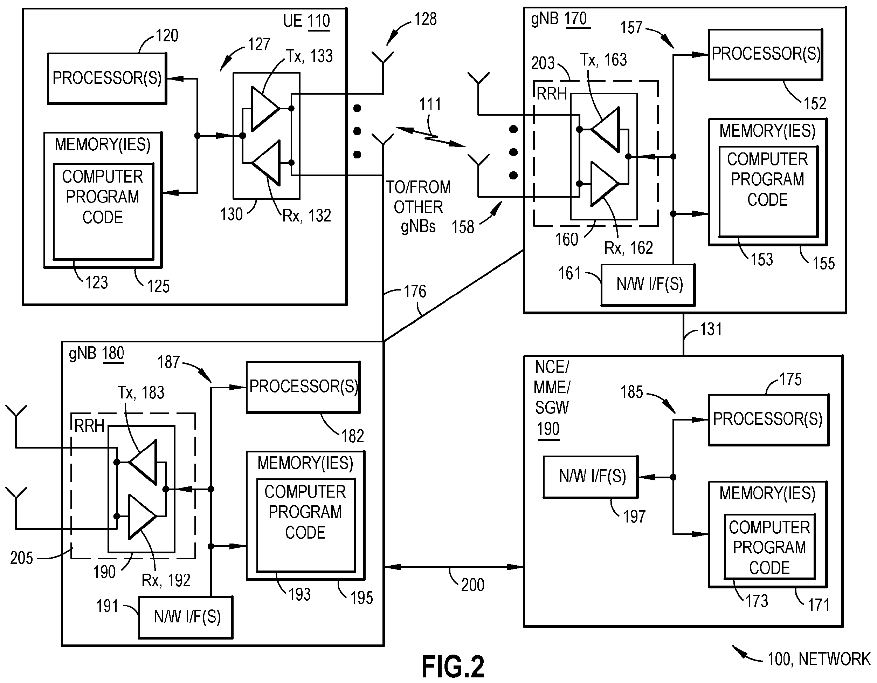

Before describing the example embodiments of the invention in further detail, reference is made to FIG. 2 for illustrating a simplified block diagram of various electronic devices that are suitable for use in practicing the example embodiments of this invention. FIG. 2 shows a block diagram of one possible and non-limiting exemplary system in which the example embodiments of the invention may be practiced. In FIG. 2, a user equipment (UE) 110 is in wireless communication with a wireless network 100. A UE is a wireless, typically a user equipment or mobile device that can access a wireless network. The UE 110 includes one or more processors 120, one or more memories 125, and one or more transceivers 130 interconnected through one or more buses 127. Each of the one or more transceivers 130 includes a receiver Rx, 132 and a transmitter Tx 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more transceivers 130 have multi-connectivity configurations and communicate over the wireless network 100 or any other network. The one or more memories 125 include computer program code 123 executed by the one or more processors 120. The one or more processors 120 may be implemented also as an integrated circuit or through other hardware such as a programmable gate array. For instance, the one or more memories 125 and the computer program code 123 may be configured, with the one or more processors 120, to cause the user equipment 110 to perform one or more of the operations as described herein. The UE 110 communicates with gNB 170 and the gNB 180 via a wireless link 111.

The gNB 170 (NR/5G Node B or possibly an evolved NB) is a base station such as a secondary node base station (e.g., for NR or LTE long term evolution) that communicates with devices such as gNB 180 and UE 110 of FIG. 2. The gNB 170 provides access to wireless devices such as the UE 110 to the wireless network 100. The gNB 170 includes one or more processors 152, one or more memories 155, one or more network interfaces (N/W I/F(s)) 161, and one or more transceivers 160 interconnected through one or more buses 157. Each of the one or more transceivers 160 includes a receiver Rx 162 and a transmitter Tx 163. The one or more transceivers 160 are connected to one or more antennas 158. The one or more memories 155 include computer program code 153executed by the one or more processors 152. The one or more processors 152 may be implemented also as an integrated circuit or through other hardware such as a programmable gate array. The one or more memories 155 and the computer program code 153 are configured to cause, with the one or more processors 152, the gNB 170 to perform one or more of the operations as described herein. The one or more network interfaces 161 and 191 and the one or more transceivers 160 that have multi-connectivity configurations and communicate over the wireless network 100 or any other network. Such communication can be between the gNB 170, the gNB 180, and the UE 110 via the links 176 and 111. In addition, two or more gNB 170 may communicate with another gNB or eNB using, e.g., links 176. The links 176 may be wired or wireless or both and may implement, e.g., an X2 interface. Further the links 176 may be through other network devices such as, but not limited to an NCE/MME/SGW device such as the NCE/MME/SGW 190 of FIG. 2.

The gNB 180 (NR/5G Node B or possibly an evolved NB) is a base station such as a master node base station (e.g., for NR or LTE long term evolution) that communicates with devices such as the gNB 170 and/or UE 110 and/or the wireless network 100. The gNB 180 includes one or more processors 182, one or more memories 195, one or more network interfaces (N/W I/F(s)) 191, and one or more transceivers 190 interconnected through one or more buses 187. Each of the one or more transceivers 190 includes a receiver Rx 192 and a transmitter Tx 183. The one or more transceivers 190 are connected to one or more antennas 185. The one or more transceivers 190 have multi-connectivity configurations and communicate over the wireless network 100 or any other network. The one or more memories 195 include computer program code 193 executed by the one or more processors 182. The one or more processors 182 may be implemented also as an integrated circuit or through other hardware such as a programmable gate array. The one or more memories 155 and the computer program code 153 are configured to cause, with the one or more processors 182, the gNB 180 to perform one or more of the operations as described herein. The one or more network interfaces 181 communicate over a network such as via the links 176. Two or more gNB 170 or gNB 180 may communicate with another gNB and/or eNB or any other device using, e.g., links 176. The links 176 maybe wired or wireless or both and may implement, e.g., an X2 interface. Further, as stated above the links 176 may be through other network devices such as, but not limited to an NCE/MME/SGW device such as the NCE/MME/SGW 190 of FIG. 2.

The one or more buses 157 and 187 may be address, data, or control buses, and may include any interconnection mechanism, such as a series of lines on a motherboard or integrated circuit, fiber optics or other optical communication equipment, wireless channels, and the like. For example, the one or more transceivers 160 and/or 190 may be implemented as a remote radio head (RRH) 203 and/or 205, with the other elements of the gNB 170 being physically in a different location from the RRH, and the one or more buses 157 could be implemented in part as fiber optic cable to connect the other elements of the gNB 170 to a RRH.

It is noted that description herein indicates that "cells" perform functions, but it should be clear that the gNB that forms the cell will perform the functions. The cell makes up part of a gNB. That is, there can be multiple cells per gNB.

The wireless network 100 may include a network control element (NCE) 190 that may include MME (Mobility Management Entity)/SGW (Serving Gateway) functionality, and which provides connectivity with a further network, such as a telephone network and/or a data communications network (e.g., the Internet). The gNB 170 is coupled via a link 131 to the NCE 190. The gNB 180 is coupled via a link 200 to the NCE 190. Further, the gNB 180 is coupled via links 176 to the gNB 170. The links 131, 176, and/or 200 may be implemented as, e.g., an S1 interface.

The NCE 190 includes one or more processors 175, one or more memories 171, and one or more network interfaces (N/W I/F(s)) 197, interconnected through one or more buses coupled with the link 185. The one or more memories 171 include computer program code 173. The one or more memories 171 and the computer program code 173 are configured to, with the one or more processors 175, cause the NCE 190 to perform one or more operations which may be needed to support the operations in accordance with the example embodiments of the invention.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 120, 152, 182, or 175 and memories 125, 155, 195, and 171, and also such virtualized entities create technical effects.

The computer readable memories 125, 155, 171, and 195 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, 171, and 195 may be means for performing storage functions. The processors 125, 155, 171, and 195 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, 175, and 182 may be means for performing functions, such as controlling the UE 110, gNB 170, gNB 180, and other functions as described herein.

As similarly stated above, in the present specifications at least the following problems can occur:
**Sub-problem 1.** SRB1, SRB2 can be split bearers. If integrity-verification failure occurs on SRB1 or SRB2, the UE initiates RRC connection re-establishment, regardless of whether the RRC PDU was received over MCG or SCG. In the case of SCG one might claim that RRC connection re-establishment is unnecessary, and initiating SCG failure information procedure would be sufficient; and
**Sub-problem 2.** NR RRC currently relies on integrity check failure indication from SCG lower layers. However, on split bearers, PDCP - the protocol layer in charge of integrity check failure indication to RRC - is not associated with SCG anymore than with MCG: PDCP only indicates to RRC whenever integrity check failure occurs. And because it is a split bearer, RRC has no way of associating this failure to MCG or SCG; and
**Sub-problem 3.** Within the radio access network, different network nodes do not seem to have means to inform each other about integrity-verification failures.

To address at least these problems, in accordance with example embodiments of the invention, there is:
At PDCP:
- if integrity verification fails, indicate the integrity verification failure to upper layer (RRC), along with the cell group over which the PDCP Data PDU was received.
   o In the case of a downlink PDU on the UE side, this is a UE-internal indication. In the case of an uplink PDU on the network side, in case of C-plane - U-plane split of a central unit (CU) of a nodeB such as an NR gNB, this indication would need to be carried over the E1AP protocol (TS 38.463); and

At RRC:
- upon integrity check failure indication from lower layers:
   o if the failure was for a packet received over the MCG, initiate RRC connection re-establishment procedure;
   o if the failure was for a packet received over the SCG, initiate SCG-failure-information procedure; and

At XnAP (e.g., TS 38.423):
- At a network node, upon indication of integrity check failure of an uplink PDCP Data PDU received from the UE over a cell group hosted by another network node: send an indication of such failure to that other node.

The new actions proposed above for PDCP may be subject to one or more of the following conditions:
- only if explicitly configured by RRC to do so;
- only if the PDCP Data PDU was received over a split bearer;
- only if the PDCP Data PDU was received over a [split] bearer with data duplication configured.

The new actions proposed above for RRC may apply to certain types of bearer only, such as:
- SRBs only, or
- split SRBs only.

The purpose of the proposed XnAP indication is to keep the right entity on the network side informed when the UE is configured with dual connectivity i.e. is being served both by a Master Node and Secondary Node at network side (e.g., see 3GPP TS 37.340). An example use case is integrity-verification failure of an uplink PDU received over the Master Cell Group on a radio bearer whose PDCP entity is terminated in the dual-connectivity Secondary Node. In this case, the Secondary Node should inform the Master Node of such a failure.

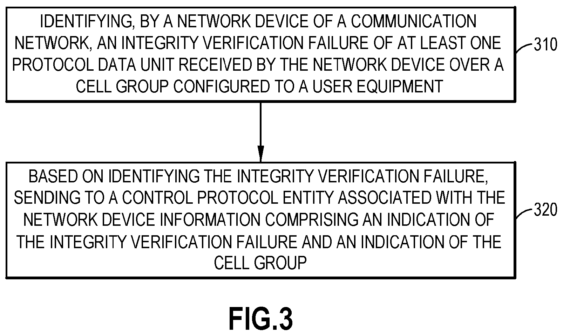

FIG.3 illustrates operations which may be performed by a device such as, but not limited to, a device such as the gNB 170 and/or gNB 180 and/or UE 110 as in FIG. 2. As shown in step 310 of FIG. 3 there is identifying, by a network device of a communication network, an integrity verification failure of at least one protocol data unit received by the network device over a cell group configured to a user equipment. Then as shown in step 320 of FIG. 3 there is, based on identifying the integrity verification failure, sending to a control protocol entity associated with the network device information comprising an indication of the integrity verification failure and an indication of the cell group.

In accordance with the example embodiments as described in the paragraph above, wherein the at least one protocol data unit comprises at least one packet data convergence protocol data unit, and wherein the at least one packet data convergence protocol data unit is received over the cell group using at least one bearer, and
there is determining by the network device at least one condition is associated with the at least one bearer, wherein the sending the information comprising the indication of the integrity verification failure and the indication of the cell group is based on the determined at least one condition.

In accordance with the example embodiments as described in the paragraphs above, wherein the at least one condition comprises at least one of: a condition that the network device is configured by a radio resource control layer to perform the at least one operation based on the integrity verification failure, a condition that the at least one packet data convergence protocol data unit was received over a split bearer, and a condition that the at least one packet data convergence protocol data unit was received over the at least one bearer with data duplication configured.

In accordance with the example embodiments as described in the paragraphs above, there is determining whether the at least one protocol data unit was received over a master cell group or a secondary cell group, and based on the determining, initiating at least one procedure.

In accordance with the example embodiments as described in the paragraphs above, wherein for a case it is determined that the at least one protocol data unit was received over a master cell group, the at least one procedure comprises initiating a radio resource control connection re-establishment procedure.

In accordance with the example embodiments as described in the paragraphs above, wherein for a case it is determined that the at least one protocol data unit was received over a secondary cell group, the at least one procedure comprises initiating a secondary cell group failure information procedure.

In accordance with the example embodiments as described in the paragraphs above, there is determining by the control protocol entity associated with the network device that the cell group is controlled by another network device; and based on the determining, causing communicating of the indication of the integrity verification failure and the cell group to the another network device.

In accordance with the example embodiments as described in the paragraphs above, wherein the indication is sent to the another network device over an Xn application protocol.

In accordance with the example embodiments as described in the paragraphs above, wherein the control protocol entity is associated with a central unit of the network device, and wherein the central unit is subdivided into a control-plane side and a user-plane side, and wherein the information comprising the indication of the integrity verification failure and the indication of the cell group is sent from the user-plane side to the control-plane side using an E1AP protocol.

In accordance with the example embodiments as described in the paragraphs above, wherein based on the identifying the information comprising the indication of the integrity verification failure and the indication of the cell group is sent from a packet data convergence protocol entity to a radio resource control layer at the network device.

In accordance with the example embodiments as described in the paragraphs above, wherein the radio resource control layer is determining whether the at least one protocol data unit was received over a master cell group or a secondary cell group, and based on the determining, initiating at least one procedure.

In accordance with the example embodiments as described in the paragraphs above, wherein the at least one bearer comprises a split bearer.

In accordance with the example embodiments as described in the paragraphs above, wherein the network device is embodied in one of the user equipment and a base station of the communication network.

A non-transitory computer-readable medium (Memory(ies) 125, Memory(ies) 155 and/or Memory(ies) 195 as in FIG. 2) storing program code (Computer Program Code 123, Computer Program Code 153 and/or Computer Program Code 193 as in FIG. 2), the program code executed by at least one processor (Processor(s) 120, Processor(s) 152 and/or Processors 182 as in FIG. 2) to perform the operations as at least described in the paragraphs above.

In accordance with an example embodiment of the invention as described above there is an apparatus comprising: means for identifying (one or more transceivers 130, RRH 203, and/or RRH 205; Computer Program Code 123, Computer Program Code 153, and/or Computer Program Code 193; and Processor(s) 120, Processor(s) 152 and/or Processors 182 as in FIG. 2), by a network device (UE 110, gNB 170, and/or gNB 180 as in FIG. 2) of a communication network (Network 100 as in FIG. 2), an integrity verification failure of at least one protocol data unit received by the network device over a cell group configured to a user equipment (UE 110 as in FIG. 2); and means, based on identifying the integrity verification failure, for sending (one or more transceivers 130, RRH 203, and/or RRH 205; Computer Program Code 123, Computer Program Code 153, and/or Computer Program Code 193; and Processor(s) 120, Processor(s) 152 and/or Processors 182 as in FIG. 2) to a control protocol entity associated with the network device (UE 110, gNB 170, and/or gNB 180 as in FIG. 2) information comprising an indication of the integrity verification failure and an indication of the cell group.

In the example aspect of the invention according to the paragraph above, wherein at least the means for identifying and sending comprises a non-transitory computer readable medium [Memory(ies) 125, Memory(ies) 155 and/or Memory(ies) 195 as in FIG. 2] encoded with a computer program [Computer Program Code 123, Computer Program Code 153 and/or Computer Program Code 193 as in FIG. 2] executable by at least one processor [Processor(s) 120, Processor(s) 152 and/or Processors 182 as in FIG. 2].

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings, as long as they fall within the scope of the invention as defined by the claims.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. A method, comprising:
identifying (310), by a packet data convergence protocol entity of a network device of a communication network, an integrity verification failure for at least one protocol data unit received by the network device from a cell group, wherein the cell group is configured to a user equipment; and
based on identifying the integrity verification failure, sending (320), by the packet data convergence protocol entity of the network device to a radio resource control layer at the network device, information comprising: i) an indication of the integrity verification failure, and ii) an indication of the cell group,
wherein the at least one protocol data unit comprises at least one packet data convergence protocol data unit, and wherein the at least one packet data convergence protocol data unit is received from the cell group using at least one bearer;
the method further comprising:
determining by the network device at least one condition associated with the at least one bearer, wherein the sending the information comprising the indication of the integrity verification failure and the indication of the cell group is based on the determined at least one condition, wherein the at least one condition comprises a condition that the at least one packet data convergence protocol data unit was received from a split bearer; and
the method further comprising:
determining, by the radio resource control layer,
whether the at least one protocol data unit was received over a master cell group or a secondary cell group, and
when it is determined that the at least one protocol data unit was received from a master cell group, initiating a radio resource control connection re-establishment procedure, and
when it is determined that the at least one protocol data unit was received from a secondary cell group, initiating a secondary cell group failure information procedure.

2. An apparatus wherein the apparatus is a network device of a communication network, comprising:
means for identifying (310), by a packet data convergence protocol entity of the network device, an integrity verification failure for at least one protocol data unit received by the network device from a cell group, wherein the cell group is configured to a user equipment; and
means for, based on identifying the integrity verification failure, sending (320), by the packet data convergence protocol entity of the network device to a radio resource control protocol layer at the network device, information comprising: i) an indication of the integrity verification failure, and ii) an indication of the cell group,
wherein the at least one protocol data unit comprises at least one packet data convergence protocol data unit, and wherein the at least one packet data convergence protocol data unit is received from the cell group using at least one bearer; and
the apparatus further comprising:
means for determining by the network device at least one condition associated with the at least one bearer, wherein the sending the information comprising the indication of the integrity verification failure and the indication of the cell group is based on the determined at least one condition, wherein the at least one condition comprises a condition that the at least one packet data convergence protocol data unit was received from a split bearer,
the apparatus further comprising:
means for determining, by the radio resource control layer, whether the at least one protocol data unit was received from a master cell group or a secondary cell group, and
means for initiating a radio resource control connection re-establishment procedure when it is determined that the at least one protocol data unit was received from a master cell group; and
means for initiating a secondary cell group failure information procedure when it is determined that the at least one protocol data unit was received from a secondary cell group.

## Patentansprüche

1. Verfahren, das Folgendes umfasst:
Identifizieren (310) eines Integritätsverifizierungsfehlers für mindestens eine Protokolldateneinheit, die von einer Netzwerkvorrichtung von einer Zellgruppe empfangen wird, durch eine Paketdatenkonvergenzprotokollentität der Netzwerkvorrichtung eines Kommunikationsnetzwerks, wobei die Zellgruppe auf eine Teilnehmereinrichtung ausgelegt ist; und
auf Basis des Identifizierens des Integritätsverifizierungsfehlers Senden (320) von Informationen, die Folgendes umfassen: i) eine Anzeige des Integritätsverifizierungsfehlers und ii) eine Anzeige der Zellgruppe, durch die Paketdatenkonvergenzprotokollentität der Netzwerkvorrichtung an eine Funkressourcensteuerschicht an der Netzwerkvorrichtung,
wobei die mindestens eine Protokolldateneinheit mindestens eine Paketdatenkonvergenzprotokolldateneinheit umfasst und wobei die mindestens eine Paketdatenkonvergenzprotokolldateneinheit unter Verwendung von mindestens einem Träger von der Zellgruppe empfangen wird;
wobei das Verfahren ferner Folgendes umfasst:
Bestimmen von mindestens einer Bedingung, die mit dem mindestens einen Träger verknüpft ist, durch die Netzwerkvorrichtung, wobei das Senden der Informationen, die die Anzeige des Integritätsverifizierungsfehlers und die Anzeige der Zellgruppe umfassen, auf der bestimmten mindestens einen Bedingung basiert, wobei die mindestens eine Bedingung eine Bedingung umfasst, dass die mindestens eine Paketdatenkonvergenzprotokolldateneinheit von einem geteilten Träger empfangen wurde; und
wobei das Verfahren ferner Folgendes umfasst:
Bestimmen durch die Funkressourcensteuerschicht, ob die mindestens eine Protokolldateneinheit über eine Masterzellgruppe oder eine Sekundärzellgruppe empfangen wurde, und
wenn bestimmt wird, dass die mindestens eine Protokolldateneinheit von einer Masterzellgruppe empfangen wurde, Initiieren einer Funkressourcensteuerverbindungsneuaufbauprozedur, und
wenn bestimmt wird, dass die mindestens eine Protokolldateneinheit von einer Sekundärzellgruppe empfangen wurde, Initiieren einer Sekundärzellgruppenfehlerinformationsprozedur.

2. Einrichtung, wobei die Einrichtung eine Netzwerkvorrichtung eines Kommunikationsnetzwerks ist und Folgendes umfasst:
Mittel zum Identifizieren (310) eines Integritätsverifizierungsfehlers für mindestens eine Protokolldateneinheit, die von der Netzwerkvorrichtung von einer Zellgruppe empfangen wird, durch eine Paketdatenkonvergenzprotokollentität der Netzwerkvorrichtung, wobei die Zellgruppe auf eine Teilnehmereinrichtung ausgelegt ist; und
auf Basis des Identifizierens des Integritätsverifizierungsfehlers Mittel zum Senden (320) von Informationen, die Folgendes umfassen: i) eine Anzeige des Integritätsverifizierungsfehlers und ii) eine Anzeige der Zellgruppe, durch die Paketdatenkonvergenzprotokollentität der Netzwerkvorrichtung an eine Funkressourcensteuerprotokollschicht an der Netzwerkvorrichtung,
wobei die mindestens eine Protokolldateneinheit mindestens eine Paketdatenkonvergenzprotokolldateneinheit umfasst und wobei die mindestens eine Paketdatenkonvergenzprotokolldateneinheit unter Verwendung von mindestens einem Träger von der Zellgruppe empfangen wird; und
die Einrichtung ferner Folgendes umfasst:
Mittel zum Bestimmen von mindestens einer Bedingung, die mit dem mindestens einen Träger verknüpft ist, durch die Netzwerkvorrichtung, wobei das Senden der Informationen, die die Anzeige des Integritätsverifizierungsfehlers und die Anzeige der Zellgruppe umfassen, auf der bestimmten mindestens einen Bedingung basiert, wobei die mindestens eine Bedingung eine Bedingung umfasst, dass die mindestens eine Paketdatenkonvergenzprotokolldateneinheit von einem geteilten Träger empfangen wurde,
die Einrichtung ferner Folgendes umfasst:
Mittel zum Bestimmen durch die Funkressourcensteuerschicht, ob die mindestens eine Protokolldateneinheit von einer Masterzellgruppe oder einer Sekundärzellgruppe empfangen wurde, und
Mittel zum Initiieren einer Funkressourcensteuerverbindungsneuaufbauprozedur, wenn bestimmt wird, dass die mindestens eine Protokolldateneinheit von einer Masterzellgruppe empfangen wurde; und
Mittel zum Initiieren einer Sekundärzellgruppenfehlerinformationsprozedur, wenn bestimmt wird, dass die mindestens eine Protokolldateneinheit von einer Sekundärzellgruppe empfangen wurde.

## Revendications

1. Procédé, comprenant les étapes suivantes :
identifier (310), par une entité de protocole de convergence de données par paquets d'un dispositif de réseau d'un réseau de communication, un échec de vérification d'intégrité pour au moins une unité de données de protocole reçue par le dispositif de réseau à partir d'un groupe de cellules, dans lequel le groupe de cellules est configuré pour un équipement utilisateur ; et
sur la base de l'identification de l'échec de vérification d'intégrité, envoyer (320), par l'entité de protocole de convergence de données par paquets du dispositif de réseau à une couche de contrôle de ressources radio sur le dispositif de réseau, des informations comprenant : i) une indication de l'échec de vérification d'intégrité, et ii) une indication du groupe de cellules,
dans lequel l'au moins une unité de données de protocole comprend au moins une unité de données de protocole de convergence de données par paquets, et dans lequel l'au moins une unité de données de protocole de convergence de données par paquets est reçue du groupe de cellules en utilisant au moins un support ;
le procédé comprenant en outre l'étape suivante :
déterminer par le dispositif de réseau au moins une condition associée à l'au moins un support, dans lequel l'envoi des informations comprenant l'indication de l'échec de vérification d'intégrité et l'indication du groupe de cellules est basé sur l'au moins une condition déterminée, dans lequel l'au moins une condition comprend une condition selon laquelle l'au moins une unité de données de protocole de convergence de données par paquets a été reçue d'un support divisé ; et
le procédé comprenant en outre les étapes suivantes :
déterminer par la couche de contrôle de ressources radio si l'au moins une unité de données de protocole a été reçue sur un groupe de cellules primaires ou un groupe de cellules secondaires, et
lorsqu'il est déterminé que l'au moins une unité de données de protocole a été reçue d'un groupe de cellules primaires, initier une procédure de rétablissement de connexion de contrôle de ressources radio, et
lorsqu'il est déterminé que l'au moins une unité de données de protocole a été reçue d'un groupe de cellules secondaires, initier une procédure d'informations d'échec de groupe de cellules secondaires.

2. Appareil dans lequel l'appareil est un dispositif de réseau d'un réseau de communication, comprenant :
des moyens pour identifier (310), par une entité de protocole de convergence de données par paquets du dispositif de réseau, un échec de vérification d'intégrité pour au moins une unité de données de protocole reçue par le dispositif de réseau à partir d'un groupe de cellules, dans lequel le groupe de cellules est configuré pour un équipement utilisateur ; et
des moyens pour, sur la base de l'identification de l'échec de vérification d'intégrité, envoyer (320), par l'entité de protocole de convergence de données par paquets du dispositif de réseau à une couche de protocole de contrôle de ressources radio sur le dispositif de réseau, des informations comprenant :
i) une indication de l'échec de vérification d'intégrité, et
ii) une indication du groupe de cellules,
dans lequel l'au moins une unité de données de protocole comprend au moins une unité de données de protocole de convergence de données par paquets, et dans lequel l'au moins une unité de données de protocole de convergence de données par paquets est reçue du groupe de cellules en utilisant au moins un support ; et
l'appareil comprenant en outre :
des moyens pour déterminer par le dispositif de réseau au moins une condition associée à l'au moins un support, dans lequel l'envoi des informations comprenant l'indication de l'échec de vérification d'intégrité et l'indication du groupe de cellules est basé sur l'au moins une condition déterminée, dans lequel l'au moins une condition comprend une condition selon laquelle l'au moins une unité de données de protocole de convergence de données par paquets a été reçue d'un support divisé,
l'appareil comprenant en outre :
des moyens pour déterminer par la couche de contrôle de ressources radio si l'au moins une unité de données de protocole a été reçue d'un groupe de cellules primaires ou d'un groupe de cellules secondaires, et
des moyens pour initier une procédure de rétablissement de connexion de contrôle de ressources radio lorsqu'il est déterminé que l'au moins une unité de données de protocole a été reçue d'un groupe de cellules primaires ; et
des moyens pour initier une procédure d'informations d'échec de groupe de cellules secondaires lorsqu'il est déterminé que l'au moins une unité de données de protocole a été reçue d'un groupe de cellules secondaires.
